(19) Europäisches Patentamt
European Patent Office
Office européen des brevets

(11) **EP 1 659 334 B1**

(12) **FASCICULE DE BREVET EUROPEEN**

(45) Date de publication et mention de la délivrance du brevet:
**02.06.2010 Bulletin 2010/22**

(51) Int Cl.:
***F21S 8/12*** *(2006.01)*     *F21W 101/02* *(2006.01)*

(21) Numéro de dépôt: **05292411.5**

(22) Date de dépôt: **14.11.2005**

(54) **Dispositif d'éclairage et/ou de signalisation pour automobile produisant un faisceau lumineux sur le côté d'un véhicule automobile**

Beleuchtungs- und/oder Signalisierungsvorrichtung für Kraftfahrzeuge zur Erzeugung eines Lichtstrahles an der Seite eines Kraftfahrzeuges

Lighting and/or signaling device for automobile generating a light beam on the side of the automotive vehicle

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **18.11.2004 FR 0412265**

(43) Date de publication de la demande:
**24.05.2006 Bulletin 2006/21**

(73) Titulaire: **VALEO VISION**
**93012 Bobigny Cedex (FR)**

(72) Inventeur: **Cabrera Godoy, Javier**
**23600 Martos (ES)**

(74) Mandataire: **Renous Chan, Véronique**
**Valeo Vision**
**Département Propriété Industrielle**
**34 Rue Saint-André**
**93012 Bobigny Cedex (FR)**

(56) Documents cités:
**EP-A- 1 243 844    DE-A1- 3 827 834**
**FR-A- 2 847 656    US-A- 2 058 707**
**US-A- 5 710 671**

- **PATENT ABSTRACTS OF JAPAN vol. 2003, no. 07, 3 juillet 2003 (2003-07-03) & JP 2003 086009 A (STANLEY ELECTRIC CO LTD), 20 mars 2003 (2003-03-20)**

**Description**

L'invention est relative à des dispositifs d'éclairage et/ou de signalisation pour automobile, et notamment à des projecteurs pour véhicule automobile.

Elle s'intéresse plus particulièrement à la production de faisceaux lumineux éclairant sur le côté des véhicules. On entend par là des faisceaux lumineux éclairant selon une orientation générale/moyenne oblique par rapport à l'axe longitudinal X du véhicule.

Il peut s'agir, au sens de l'invention et de façon non limitative, des faisceaux lumineux émis par des modules optiques pour assurer dans les virages un complément d'éclairage du côté où le véhicule tourne. Cette fonctionnalité est connue sous le terme de « code virage fixe », ou encore de FBL (l'abréviation anglo-saxonne de « Fixed Bending Light »). Elle est décrite par exemple dans le brevet EP 864 462. Le faisceau du FBL s'associe ainsi à un faisceau standard de type code émis par un module optique dit principal, pour donner un faisceau global avec une ouverture angulaire plus importante, ledit faisceau global devant respecter une grille photométrique définie dans les réglementations en vigueur concernant les fonctions dites AFS (abréviation du terme anglosaxon « Advanced Front Lighting Systems »).

Il peut également s'agir des faisceaux lumineux assurant une fonction d'éclairage connue sous le terme anglo-saxon de « cornering », soit un éclairage dans les coins, dont le but consiste à éclairer davantage sur les côtés du véhicule, pour permettre une meilleure visibilité au conducteur du véhicule (fonction d'éclairage), mais aussi pour permettre à l'environnement extérieur du véhicule de mieux discerner le véhicule (fonction de signalisation) Cette fonction est, à elle seule, définie par une grille photométrique spécifique prévue dans les réglementations en vigueur.

Le point commun à ces deux types de faisceaux, « cornering » et faisceau complémentaire de FBL, est qu'il faut parvenir à envoyer suffisamment de lumière selon un axe oblique par rapport à l'axe longitudinal du véhicule, ce qui pose un certain nombre de problèmes, puisque habituellement les projecteurs comprennent un ou plusieurs modules optiques émettant des faisceaux lumineux dont l'axe optique coïncide peu ou prou avec l'axe X longitudinal du véhicule. (On comprend par «module optique» un ensemble de composants comportant au moins un réflecteur, sa ou ses sources lumineuses associée(s) et éventuellement des éléments optiques associés du type éléments dioptriques, lentille de Fresnel ...), et apte à émettre au moins un faisceau lumineux donné.

Une première solution a consisté à tourner à l'intérieur du projecteur le module destiné à éclairer latéralement par rapport aux autres modules optiques : on conserve au projecteur sa configuration habituelle, avec ses modules principaux, par exemple celui émettant le faisceau code ou route, et on tourne le module complémentaire FBL ou « Cornering », de façon à ce que son axe optique fasse un angle avec l'axe optique des autres modules.

Cette solution a cependant ses limites : un module ainsi tourné est plus encombrant à l'intérieur du projecteur, avec notamment des connecteurs de lampe disposés de façon oblique, un réflecteur prenant plus de place. Or c'est la compacité que l'on recherche de plus en plus dans un projecteur. Par ailleurs, tourner ainsi le module tend à entraîner une perte de flux lumineux émis par le module : les rayons les plus obliques ont tendance à ne plus pouvoir sortir de la glace de fermeture du projecteur, et à frapper plutôt les pièces de style qui viennent habiller les modules optiques et assurer une continuité de surface entre les modules et les parois du boîtier ou la zone de jonction boîtier/glace de fermeture. Suivant donc la forme du projecteur, l'amplitude de la rotation du module est donc plus ou moins limitée, et il est difficile d'assurer que le faisceau émis par le module et sortant effectivement du projecteur soit bien compatible avec les réglementations en vigueur.

Il est également connu du document US 2 058 707 une lentille pour module d'éclairage automobile, qui est munie d'un prisme afin de dévier une petite portion de lumière émise par la lentille vers l'arrière.

Il est également connu du document US 5 710 671 un système optique utilisant une lentille munie de prismes afin de répartir la lumière émise par cette lentille.

Il est également connu du document JP2003-086009 un module optique utilisant une lampe, un réflecteur, une lentille et une lentille auxiliaire entourant ladite lentille. Une partie des rayons émis par la lampe entre dans la lentille, y subit une réflexion totale puis ressortent par une face de sortie striée.

Il est également connu du document DE 195 07 234 un feu de signalisation automobile utilisant une pluralité de Leds et utilisant une pièce optique pour collecter et répartir les flux lumineux émis par lesdites Leds.

L'invention a donc pour but de remédier aux inconvénients de cette première solution, en proposant notamment une nouvelle conception de module d'éclairage latéral, qui soit notamment plus flexible, plus performant, ou encore moins contraignant quant à la conception du projecteur incluant le module en question.

Le module optique selon l'invention est destiné à équiper un dispositif d'éclairage et/ou de signalisation pour véhicule automobile, ledit module optique comprenant au moins un réflecteur associé à au moins une source lumineuse Ce module optique comporte au moins un élément optique disposé à l'avant de la source lumineuse et apte à dévier des rayons directement émis par la source et/ou émis par la source puis réfléchis par le réflecteur, la déviation des rayons comprenant au moins une étape de réflexion totale desdits rayons dans ledit élément optique.

L'invention a donc exploité le principe optique de la réflexion totale, qui se base sur la loi de la réfraction des rayons lumineux passant d'un milieu à un autre, et qui énonce qu'un rayon lumineux qui passe d'un milieu 1 d'indice de réfraction n1 à un milieu 2 d'indice de réfraction n2 suit la loi

$$n1 \sin \alpha1 = n2 \sin \alpha2,$$

Avec $\alpha1$ l'angle d'incidence du rayon par rapport à la normale au plan séparant les deux milieux, et $\alpha2$ l'angle d'incidence du rayon partant dudit plan par rapport à la normale audit plan.

Si l'on considère que le milieu 2 est l'air, d'indice 1, et le milieu 1 une matière plastique ou de type verre, et si on calcule l'angle $\alpha1$ maximum possible pour qu'il y ait réfraction, si on pose n2 = 1, et $\sin \alpha2$ max = 1, on arrive à la relation :

$$\alpha1 \text{ max} = \text{asin} (1/n1)$$

La réfraction n'est donc plus possible dès que $\alpha1$ est supérieur à $\alpha1$ max. Et dans ce cas, on a alors une réflexion avec un angle égale à - $\alpha1$.

En choisissant une forme appropriée pour l'élément optique, on va pouvoir faire dévier les rayons entrants, ceux émis par la lampe et réfléchis par le réflecteur, suffisamment pour qu'ils aient l'orientation générale latérale voulue, sans avoir à tourner le module optique dans son ensemble.

Avantageusement, l'élément optique est une lentille présentant une face d'entrée et une face de sortie des rayons lumineux, ladite face d'entrée étant sensiblement plane et sensiblement perpendiculaire à l'axe optique de la source lumineuse. Les rayons vont ainsi entrer dans l'élément optique sans être substantiellement déviés dans le matériau constitutif de la lentille.

Cette lentille peut être en verre ou en matériau polymère, par exemple choisie dans la famille des polycarbonates ou des PMMA (poly méthacrylate de méthyle), et d'un indice de réfraction de préférence compris entre 1.40 et 1.65, notamment entre 1.49 et 1.59.

Avantageusement, la face de sortie de l'élément optique présente un profil comportant une succession de stries dont l'orientation générale des arêtes est selon un axe sensiblement perpendiculaire à l'axe optique. C'est au niveau de ces stries que la réflexion totale des rayons entrant dans la lentille va se réaliser, grâce à un choix approprié des angles des pans définissant ces stries, notamment par rapport à la face d'entrée, par rapport à l'axe optique du module ou encore entre les pans d'une même strie. Des exemples de définition géométriques vont en être écrits ci-après.

Les stries s'étendent de préférence d'un bord à l'autre de la lentille. Les arêtes des stries ont de préférence une orientation générale selon un axe (Y) sensiblement vertical, ou oblique par rapport à la verticale. On comprend les termes « oblique », « horizontal » ou « vertical » dans l'ensemble du présent texte comme les termes de rapportant à la position du composant considéré, une fois le module inséré dans le dispositif d'éclairage, l'ensemble étant en position de montage dans la carrosserie du véhicule.

De préférence, les stries sont définies par une arête délimitant :

- une première surface dite d'arrivée qui travaille en réflexion totale vis-à-vis desdits rayons lumineux provenant de la face d'entrée de l'élément optique et arrivant sur la dite surface,
- et une seconde face dite de départ des rayons lumineux, et qui travaille en réfraction vis-à-vis des rayons lumineux provenant de la face d'entrée de l'élément optique et arrivant sur la dite surface : les rayons parvenant à cette seconde surface proviennent majoritairement de la première surface à travers l'épaisseur de la strie. On a ainsi un trajet des rayons lumineux qui commence par une réfraction dans l'épaisseur de la lentille par sa face d'entrée, puis une réflexion totale, toujours dans l'épaisseur de la lentille, et enfin une réfraction à nouveau vers l'extérieur de la lentille.

De préférence, les stries de la face de sortie de la lentille présentent une première surface dite d'arrivée des rayons, qui est plane ou courbe, telle que ladite surface plane ou le plan tangent à ladite surface courbe est incliné(e) par rapport à l'axe optique (X) du module optique d'un angle $\alpha$ d'au moins 20°, notamment compris entre 25° et 50°.

Alternativement ou cumulativement, les stries de la face de sortie (6) de la lentille présentent de préférence une première surface d'arrivée des rayons, qui est plane ou courbe, telle que ladite surface plane ou le plan tangent à ladite surface courbe est inclinée par rapport à la face d'entrée de la lentille d'un angle $\beta$ d'au moins 40° notamment compris entre 40° (ou 45°) et 65°.

Avantageusement, les stries de la face de sortie de la lentille présentent une seconde surface dite de départ des rayons, qui est plane ou courbe, l'angle $\sigma$ au sommet A de l'arête entre la face d'arrivée et la face de départ ou leurs tangentes respectives étant compris entre 20° et 75°, de préférence entre 40 et 50°.

Les stries décrites plus haut peuvent être contiguës, configuration qui sera privilégiée pour assurer une déviation latérale maximale des rayons traversants l'élément optique. Mais on peut aussi les choisir non contiguës : elles peuvent être séparées par des zones optiques par exemple planes et parallèles à la face d'entrée de la lentille, pour permettre à une partie des rayons de poursuivre leur trajet au delà de la lentille dans une orientation générale proche de l'axe optique du module optique. Elles peuvent aussi être séparées par des zones aptes à modifier le trajet des rayons qui les frappent : on peut ainsi alterner les stries travaillant en réflexion totale avec des stries différentes, ne travaillant qu'en réfraction par exemple. Cette configuration permet beaucoup de flexibilité dans le faisceau final obtenu, en modulant finement sa distribution angulaire, son étalement notamment.

Avantageusement, la hauteur des stries de la lentille, notamment celles travaillant en réflexion totale, est comprise entre 0.2 et 12 mm, de préférence entre 1 et 4 mm. La hauteur de strie est définie de la manière suivante dans la présente invention : on prend la perpendiculaire à la face d'entrée de la lentille passant par l'arête de la strie, et on mesure la distance, sur cette droite, séparant l'arête de l'intersection de la droite avec la face d'entrée de la lentille.

Un avantage de l'élément optique selon l'invention est son fort rendement : il n'entraîne que très peu de pertes ou de fuites de lumière parasite.

Un autre avantage de l'élément optique de type lentille selon l'invention est industriel : on peut utiliser un même élément optique, que le module soit destiné à équiper un projecteur droit ou un projecteur gauche automobile. Il suffit de faire pivoter l'élément optique de 180° pour passer d'un module « droit » à un module « gauche », le « bas » de l'élément pour module gauche devenant « le haut » de l'élément pour module droit, ce qui simplifie la production et la gestion des stocks de l'élément en question : un seul moule est nécessaire. On peut équiper la lentille d'une ou plusieurs marques périphériques servant de détrompeurs au montage de la lentille dans le module.

Le réflecteur du module optique peut être de type à surface complexe, ou de type à génératrices paraboliques, ou de type elliptique.

Le module optique peut être apte à générer un faisceau lumineux avec ou sans coupure.

Comme déjà évoqué plus haut, le module selon l'invention trouve notamment application en tant que module d'éclairage complémentaire d'un projecteur automobile équipé d'une fonction de code virage fixe. Il génère alors plutôt un faisceau de type à coupure. Il trouve aussi application en tant qu'éclairage latéral dite « cornering » d'un projecteur automobile, et dans ce cas-là il génère un faisceau plus généralement sans coupure.

L'invention sera décrite ci-après à l'aide d'un exemple non limitatif illustré par les figures suivantes :

> **Fig.1** : une vue en perspective d'un module optique selon l'invention
> **Fig.2** : une vue en coupe horizontale du réflecteur et de la lentille du module optique selon la figure 1
> **Fig.3** : une représentation du trajet d'un rayon lumineux traversant la lentille du module optique représentée à la figure 2
> **Fig.4** : une vue schématique d'une variante de lentille de module optique selon l'invention.

Toutes ces figures sont schématiques et ne respectent pas nécessairement l'échelle. Tous les composants ne sont pas représentés, mais seulement ceux qui concernent directement l'invention, pour en faciliter la lecture.

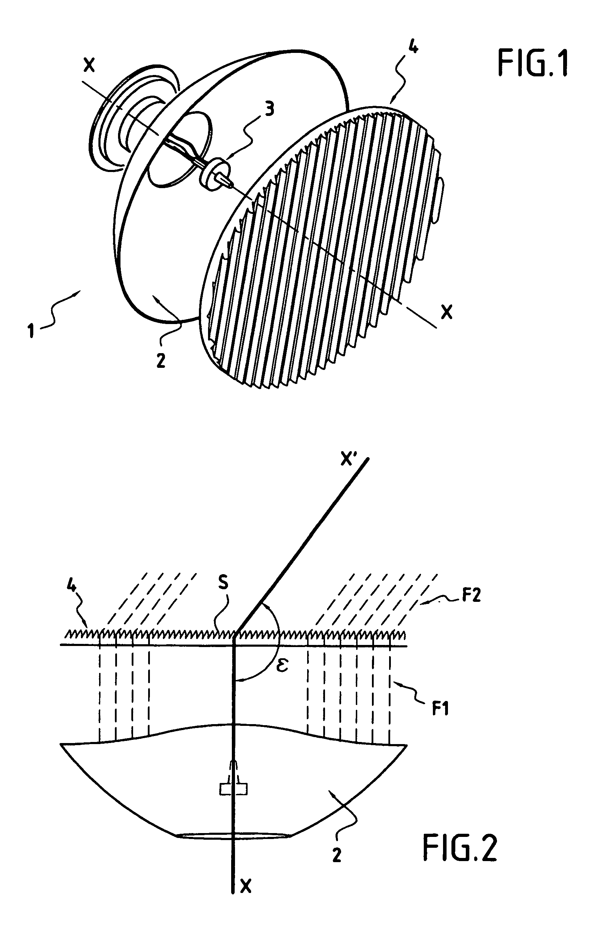

La figure 1 représente en perspective un module optique 1 comprenant un réflecteur 2, une source lumineuse du type lampe halogène ou lampe xénon 3, et une lentille 4. Le réflecteur 2 est de type surface complexe, défini de façon à générer un faisceau à coupure plate. La fonction du module est de générer un faisceau complémentaire à un faisceau code de type code virage ou FBL, quand la route tourne, ce faisceau complémentaire ayant une orientation générale faisant un angle d'au moins 40° par rapport à l'axe optique de la source lumineuse 3, ou, ce qui revient généralement au même dans le cadre de l'invention, par rapport à l'axe X longitudinal du véhicule. La lentille 4 a été définie pour obtenir cette déviation d'au moins 40° à l'aide de stries S présentes sur sa face de sortie et travaillant en réflexion totale. Elle est en polycarbonate et a un indice de réfraction d'environ 1,59. Tout autre matériau polymère ou un matériau de type verre d'indice de réfraction approprié convient également.

La figure 2 montre de façon schématique le flux lumineux F1 émis par la source 3 puis réfléchi par le réflecteur 2, qui entre dans la lentille 4 pour être quasiment entièrement redirigé sous la forme d'un flux F2 à environ 45° par rapport à l'axe optique initial (X), alors que tous les éléments jouant un rôle optique dans le module, à savoir la source, le réflecteur et la lentille, restent disposés selon l'axe (X) de la source (et du véhicule).

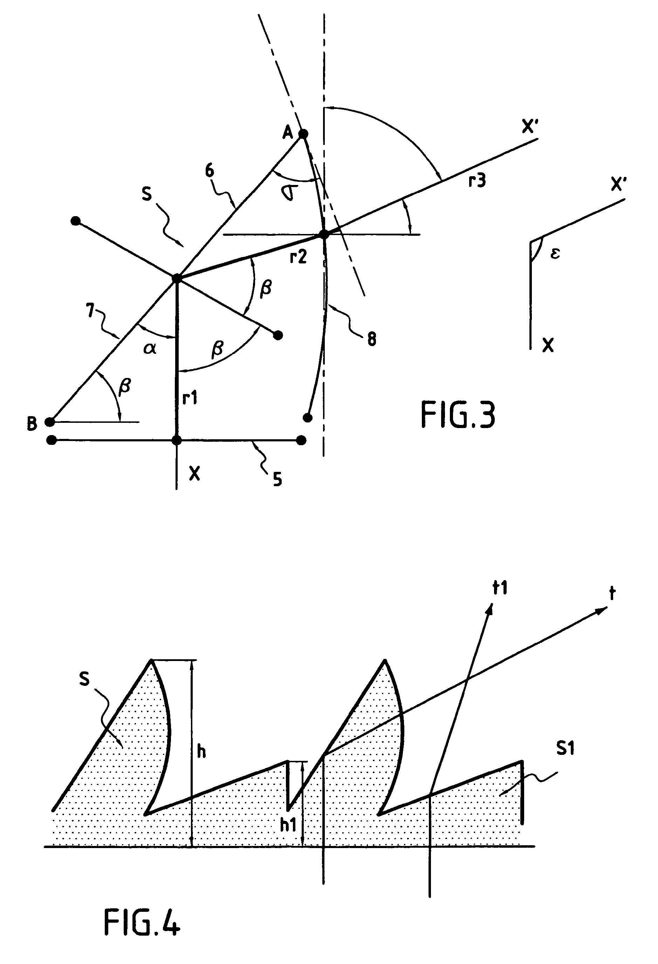

La figure 3 est un grossissement sur une strie S de la lentille 4 en coupe horizontale, avec une représentation du trajet d'un rayon lumineux à travers la strie. La description de la lentille selon l'exemple représenté aux figures 1 à 3 n'est qu'un exemple préféré, mais non limitatif de l'invention. La lentille selon cet exemple est définie par une face d'entrée 5, qui est substantiellement plane et perpendiculaire à l'axe X optique du module 1, et par une face de sortie 6 qui est une succession de stries S qui s'étendent d'un bord à l'autre de la lentille. Ces stries sont disposées parallèles les unes aux autres, et verticalement, si on considère la lentille dans la position qu'elle a dans le module en position de montage dans le véhicule. Ces stries S sont en outre contiguës. Elles ont chacune une hauteur h définie plus haut (et représentée en figure 4) d'environ 4 mm.

Chaque strie est délimitée par une arête A séparant deux pans :

- un premier pan, dit surface d'arrivée 7 des rayons. Ici, ce pan est plan et incliné par rapport à l'axe optique X d'un angle α d'environ 30°.
- un second pan, dit surface de départ 8, qui est légèrement convexe, courbe, et dont la tangente au sommet A avec le premier pan 7 fait un angle σ d'environ 70°. Alternativement, cette surface 8 peut aussi être plane, et rejoindre la base de la strie B perpendiculairement à celle-ci donc parallèlement à l'axe optique X, ou de façon oblique par rapport à ladite base B. La base B est un plan parallèle à la surface d'entrée 5 de la lentille.

Le trajet d'un rayon r1 dans cette strie se décompose de la façon suivante :

- un rayon r1 provient du flux F1 représenté à la figure 2, il a été émis par la source 3 puis réfléchi par le réflecteur 2, il vient donc frapper substantiellement perpendiculairement la face d'entrée 5 de la lentille 4. Puisque la face d'entrée est perpendiculaire à l'axe optique X, le rayon r1 n'est pas dévié en entrant dans la lentille, il poursuit donc son trajet jusqu'à la surface 7 d'arrivée de la strie S. Comme l'angle avec lequel il frappe la surface 6 est supérieur à une valeur seuil dépendant notamment des indices de réfraction comparés de l'air et de la lentille, on a une réflexion totale du rayon r1 dans la lentille
- le rayon r1 repart alors dans la strie sous forme d'un rayon r2 en direction de la surface de départ 8
- le rayon r2 frappe la surface de départ 8, y subit une réfraction et sort de la strie sous forme d'un rayon r3 dévié d'un certain angle par rapport à r2

Globalement, l'angle entre le rayon r1 initial et le rayon r3 final est d'environ 130°, c'est l'angle ε formé entre l'axe optique initial X du flux F1 et l'axe X' du flux F2 représenté à la figure 2. Cet angle peut être ajusté dans une gamme donnée, par exemple comprise entre 100° et 150°, notamment entre 120 et 140°.

Le fait que la surface de départ 8 de la strie soit convexe permet de mieux ajuster la distribution du faisceau F2, notamment horizontale. De façon alternative, cette surface pourrait être plane, et la possibilité d'ajuster la répartition notamment horizontale du faisceau peut être obtenue en courbant légèrement la face d'arrivée 7 de la strie. Les deux faces 6 et 7 peuvent aussi être toutes les deux planes ou toutes les deux légèrement courbes, convexes, arrondies. Dans le cas où la lentille est moulée, ce choix prendra avantageusement en compte la facilité de moulage de la pièce, en évitant de préférence des formes imposant des dépouilles non moulables aisément.

La figure 4 est une variante de l'invention : elle représente une portion de lentille, avec une alternance de deux types de stries : les stries S déjà décrites à l'aide des figures précédentes, mais qui alternent cette fois avec des stries S1 travaillant en réfraction. La flèche t rappelle pour mémoire et de façon simplifiée le trajet d'un rayon lumineux arrivant sur la strie S travaillant en réflexion totale. La flèche t1 montre le trajet d'un rayon lumineux frappant une strie S1 travaillant en réfraction. Dans le premier cas on a une forte déviation entre le rayon entrant et le rayon sortant, avec une réflexion sur un pan de la strie S puis réfraction sur l'autre. Dans le second cas, on a une seule réfraction sur un des pans de la strie S1, et de fait une déviation bien moindre entre rayon entrant et rayon sortant (ici un angle de déviation environ trois fois plus grand avec les stries S1). A noter qu'ici les stries S ont une hauteur h au moins deux fois supérieure à la hauteur h1 des stries S1.

Alterner ainsi les stries de différentes géométries donne une liberté supplémentaire pour ajuster la répartition horizontale, la distribution angulaire du faisceau global F2. On peut aussi alterner n stries S avec n1 stries S1, avec n et/ou n1 supérieur à 1.

**Revendications**

1. Module optique (1) de dispositif d'éclairage et/ou de signalisation pour véhicule automobile, ledit module optique comprenant au moins un réflecteur (2) associé à au moins une source lumineuse (3), ledit module optique (1) comportant au moins un élément optique (4) disposé à l'avant de la source lumineuse (3) et apte à dévier des rayons directement émis par la source (3) et/ou émis par la source puis réfléchis par le réflecteur (2), la déviation des rayons comprenant au moins une étape de réflexion totale desdits rayons dans ledit élément optique (4), la face de sortie (6) de l'élément optique (4) présentant un profil comportant une succession de stries (S) dont l'orientation générale des arêtes (A) est selon un axe sensiblement perpendiculaire à l'axe optique (X), et **caractérisé en ce que** ledit module sert de module d'éclairage complémentaire d'un projecteur automobile équipé d'une fonction de code virage fixe ou ledit module assure la fonction d'éclairage latéral dite « cornering » d'un projecteur automobile et **en ce que** l'élément optique (4) est une lentille présentant une face d'entrée (5) et une face de sortie (6) des rayons lumineux, ladite face d'entrée (5) étant sensiblement plane et sensiblement perpendiculaire à l'axe optique (X) de la source lumineuse (3).

2. Module selon la revendication précédente, **caractérisé en ce que** les arêtes des stries (S) ont une orientation générale selon un axe (Y) sensiblement vertical, ou oblique par rapport à la verticale.

3. Module selon l'une des revendications précédentes, **caractérisé en ce que** les stries (S) sont définies par une arête (A) délimitant

- une première surface dite d'arrivée (7) qui travaille en réflexion totale vis-à-vis desdits rayons lumineux provenant de la face d'entrée (5) de l'élément optique (4) et arrivant sur la dite surface,
- et une seconde face dite de départ (8) des rayons lumineux, et qui travaille en réfraction vis-à-vis des rayons lumineux provenant de la face d'entrée (5) de l'élément optique (4) et arrivant sur la dite surface.

**4.** Module selon l'une des revendications précédentes, **caractérisé en ce que** les stries (S) de la face de sortie (6) de la lentille (4) présentent une première surface dite d'arrivée (7) des rayons, qui est plane ou courbe, telle que ladite surface plane ou le plan tangent à ladite surface courbe est incliné(e) par rapport à l'axe optique (X) du module optique d'un angle α d'au moins 20° notamment compris entre 25° et 50°.

**5.** Module selon l'une des revendications précédentes, **caractérisé en ce que** les stries (S) de la face de sortie (6) de la lentille (4) présentent une première surface d'arrivée (7) des rayons, qui est plane ou courbe, telle que ladite surface plane ou le plan tangent à ladite surface courbe est inclinée par rapport à la face d'entrée (5) de la lentille d'un angle β d'au moins 40° notamment compris entre 40° et 65°.

**6.** Module selon l'une des revendications précédentes, **caractérisé en ce que** les stries de la face de sortie (6) de la lentille (4) présentent une seconde surface dite de départ (8) des rayons, qui est plane ou courbe, l'angle σ au sommet A de l'arête entre la face d'arrivée (7) et la face de départ (8) ou leurs tangentes respectives étant compris entre 20 ° et 75°.

**7.** Module selon l'une des revendications précédentes, **caractérisé en ce que** les stries (S) sont contiguës ou non contiguës.

**8.** Module selon l'une des revendications précédentes, **caractérisé en ce que** les stries (S) sont alternées avec des stries différentes (S1), notamment ne travaillant qu'en réfraction.

**9.** Module selon l'une des revendications précédentes, **caractérisé en ce que** la hauteur (h) des stries (S) est comprise entre 0.2 et 12 mm.

**10.** Module selon l'une des revendications précédentes, **caractérisé en ce que** le réflecteur (2) est de type à surface complexe, ou de type à génératrices paraboliques, ou de type elliptique.

**11.** Module selon l'une des revendications précédentes, **caractérisé en ce qu'**il est apte à générer un faisceau lumineux avec ou sans coupure.

**12.** Module selon l'une des revendications précédentes, **caractérisé en ce qu'** un même élément optique (4) est utilisé, que le module soit destiné à équiper un projecteur droit ou un projecteur gauche automobile, l'élément optique (4) étant pivoté de 180° pour passer d'un module « droit » à un module « gauche ».

**13.** Projecteur automobile, **caractérisé en ce qu'**il comporte au moins un module selon l'une des revendications précédentes.

**Claims**

**1.** Optical module (1) for a lighting and/or signalling device for a motor vehicle, the said optical module comprising at least one reflector (2) which is associated with at least one source of light (3), the said optical module (1) comprising at least one optical element (4) which is disposed to the front of the source of light (3), and can deflect rays which are emitted directly by the source (3) and/or are emitted by the source then reflected by the reflector (2), the deflection of the rays comprising at least one step of total reflection of the said rays in the said optical element (4), the output surface (6) of the optical element (4) having a profile comprising a succession of grooves (S), the general orientation of the ridges (A) of which is according to an axis which is substantially perpendicular to the optical axis (X), and **characterised in that** the said module acts as a complementary lighting module of a motor vehicle headlight which is equipped with a fixed bending light function, or the said module provides the lateral lighting function, known as cornering, of a motor vehicle headlight, and **in that** the optical element (4) is a lens which has an intake surface (5) and an output surface (6) for the rays of light, the said intake surface (5) being substantially flat and substantially perpendicular to the optical axis (X) of the source of light (3).

**2.** Module according to the preceding claim, **characterised in that** the ridges of the grooves (S) have a general orientation according to an axis (Y) which is substantially vertical or oblique relative to the vertical.

**3.** Module according to one of the preceding claims, **characterised in that** the grooves (S) are defined by a ridge (A) which delimits:

- a first surface called the entry surface (7), which works with total reflection in relation to the said rays of light which are coming from the intake surface (5) of the optical element (4) and are reaching the said surface; and
- a second surface called the exit surface (8) for the rays of light, and which works with refraction in relation to the rays of light which are obtained from the intake surface (5) of the optical element (4), and reach the said surface.

**4.** Module according to one of the preceding claims, **characterised in that** the grooves (S) of the output surface (6) of the lens (4) have a first surface known as the entry surface (7) for the rays, which is flat or curved, such that the said flat surface or the plane which is tangent to the said curved surface is inclined relative to the optical axis (X) of the optical module by an angle a of at least 20°, and in particular between 25° and 50°.

5. Module according to one of the preceding claims, **characterised in that** the grooves (S) of the output surface (6) of the lens (4) have a first entry surface (7) for the rays which is flat or curved, such that the said flat surface or the plane which is tangent to the said curved surface is inclined relative to the intake surface (5) of the lens by an angle β of at least 40°, and in particular between 40° and 65°.

6. Module according to one of the preceding claims, **characterised in that** the grooves (S) of the output surface (6) of the lens (4) have a second, so-called exit surface (8) for the rays, which is flat or curved, the angle σ at the top A of the ridge between the entry surface (7) and the exit surface (8) or their respective tangents being between 20° and 75°

7. Module according to one of the preceding claims, **characterised in that** the grooves (S) are contiguous or are not contiguous.

8. Module according to one of the preceding claims, **characterised in that** the grooves (S) alternate with different grooves (S1), which in particular work only with refraction.

9. Module according to one of the preceding claims, **characterised in that** the height (h) of the grooves (S) is between 0.2 and 12 mm.

10. Module according to one of the preceding claims, **characterised in that** the reflector (2) is of a complex surface type, or a type with parabolic generatrices, or an elliptical type.

11. Module according to one of the preceding claims, **characterised in that** it can generate a light beam with or without cut-off.

12. Module according to one of the preceding claims, **characterised in that** a single optical element (4) is used, whether the module is designed to equip a right-hand or left-hand motor vehicle headlight, the optical element (4) being pivoted by 180° in order to go from a "right-hand" module to a "left-hand" module.

13. Motor vehicle headlight, **characterised in that** it comprises at least one module according to one of the preceding claims.

**Patentansprüche**

1. Optikmodul (1) einer Kraftfahrzeugbeleuchtungs- und/oder -signalgebungsvorrichtung, wobei das Optikmodul wenigstens einen Reflektor (2) umfasst, der wenigstens einer Lichtquelle (3) zugeordnet ist, wobei das Optikmodul (1) wenigstens ein vor der Lichtquelle (3) angeordnetes optisches Element (4) umfasst, das von der Lichtquelle (3) direkt emittierte und/oder von der Lichtquelle emittierte und anschließend vom Reflektor (2) reflektierte Lichtstrahlen abzulenken vermag, wobei die Ablenkung der Lichtstrahlen wenigstens einen Totalreflexionsschritt der Lichtstrahlen in dem optischen Element (4) aufweist, wobei die Austrittsfläche (6) des optischen Elements (4) ein Profil mit aufeinanderfolgenden Rippen (S) aufweist, bei denen die allgemeine Ausrichtung der Kanten (A) längs einer zur optischen Achse (X) im Wesentlichen lotrechten Achse ausgeführt ist, und **dadurch gekennzeichnet, dass** das Modul als zusätzliches Beleuchtungsmodul eines mit einer statischen Kurvenlichtfunktion ausgestatteten Kraftfahrzeugscheinwerfers dient oder das Modul die als "Cornering Light" bezeichnete Abbiegelichtfunktion eines Kraftfahrzeugscheinwerfers erfüllt, und dass das optische Element (4) eine Linse ist, die eine Lichtstrahleneintrittsfläche (5) und eine Lichtstrahlenaustrittsfläche (6) aufweist, wobei die Eintrittsfläche (5) im Wesentlichen eben und im Wesentlichen lotrecht zur optischen Achse (X) der Lichtquelle (3) ist.

2. Modul nach dem vorhergehenden Anspruch, **dadurch gekennzeichnet, dass** die Kanten der Rippen (S) eine allgemeine Ausrichtung längs einer Achse (Y) haben, die im Wesentlichen senkrecht oder bezüglich der Senkrechten schräg verläuft.

3. Modul nach einem der vorhergehenden Ansprüche, **dadurch gekennzeichnet, dass** die Rippen (S) durch eine Kante (A) definiert sind,

    - die eine erste sogenannte Ankunftsfläche (7) begrenzt, die gegenüber den von der Eintrittsfläche (5) des optischen Elements (4) stammenden und auf dieser Fläche ankommenden Lichtstrahlen eine Totalreflexion bewirkt,
    - und die eine sogenannte Lichtstrahlenabgangsfläche (8) begrenzt, die gegenüber den von der Eintrittsfläche (5) des optischen Elements (4) stammenden und auf dieser Fläche ankommenden Lichtstrahlen eine Lichtbrechung bewirkt.

4. Modul nach einem der vorhergehenden Ansprüche, **dadurch gekennzeichnet, dass** die Rippen (S) der Austrittsfläche (6) der Linse (4) eine erste sogenannte Lichtstrahlenankunftsfläche (7) aufweist, die eben oder gekrümmt ist, so dass die ebene Fläche oder die die gekrümmte Fläche tangierende Ebene bezüglich der optischen Achse (X) des Optikmoduls in einem Winkel $\alpha$ von mindestens 20°, insbesondere zwischen 25° und 50° geneigt ist.

5. Modul nach einem der vorhergehenden Ansprüche, **dadurch gekennzeichnet, dass** die Rippen (S) der Austrittsfläche (6) der Linse (4) eine erste Lichtstrahlenankunftsfläche (7) aufweisen, die eben oder gekrümmt ist, so dass die ebene Fläche oder die die gekrümmte Fläche tangierende Ebene bezüglich der Eintrittsfläche (5) der Linse in einem Winkel $\beta$ von mindestens 40°, insbesondere zwischen 40° und 65° geneigt ist.

6. Modul nach einem der vorhergehenden Ansprüche, **dadurch gekennzeichnet, dass** die Rippen der Austrittsfläche (6) der Linse (4) eine zweite sogenannte Lichtstrahlenabgangsfläche (8) aufweisen, die eben oder gekrümmt ist, wobei der Winkel $\sigma$ am Scheitelpunkt A der Kante zwischen der Ankunftsfläche (7) und der Abgangsfläche (8) oder deren jeweiligen Tangenten zwischen 20° und 75° liegt.

7. Modul nach einem der vorhergehenden Ansprüche, **dadurch gekennzeichnet, dass** die Rippen (S) aneinandergrenzend oder nicht aneinandergrenzend sind.

8. Modul nach einem der vorhergehenden Ansprüche, **dadurch gekennzeichnet, dass** die Rippen (S) abwechselnd mit anderen Rippen (S1) angeordnet sind, die insbesondere nur lichtbrechend wirken.

9. Modul nach einem der vorhergehenden Ansprüche, **dadurch gekennzeichnet, dass** die Höhe (h) der Rippen (S) zwischen 0,2 und 12 mm beträgt.

10. Modul nach einem der vorhergehenden Ansprüche, **dadurch gekennzeichnet, dass** der Reflektor (2) vom Typ mit komplexer Oberfläche oder vom Typ mit parabolischen Erzeugenden oder vom ellipsoiden Typ ist.

11. Modul nach einem der vorhergehenden Ansprüche, **dadurch gekennzeichnet, dass** es ein Lichtbündel mit oder ohne Hell-Dunkel-Grenze zu erzeugen vermag.

12. Modul nach einem der vorhergehenden Ansprüche, **dadurch gekennzeichnet, dass** ein und dasselbe optische Element (4) verwendet wird, gleichgültig ob das Modul einen rechten oder einen linken Kraftfahrzeugscheinwerfer ausrüsten soll, wobei das optische Element (4) um 180° geschwenkt wird, um sich von einem "rechten" Modul in ein "linkes" Modul zu verwandeln.

13. Kraftfahrzeugscheinwerfer, **dadurch gekennzeichnet, dass** er wenigstens ein Modul nach einem der vorhergehenden Ansprüche umfasst.

FIG.1

FIG.2

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 864462 A
- US 2058707 A
- US 5710671 A
- JP 2003086009 A
- DE 19507234